# EUROPÄISCHE PATENTSCHRIFT

(11) **EP 0 931 705 B1**
(45) Veröffentlichungstag und Bekanntmachung des Hinweises auf die Patenterteilung: **28.05.2003**
(21) Anmeldenummer: 98124441.1
(22) Anmeldetag: 22.12.1998
(51) Int. Cl.: B60R 21/26

(54) **Gasgenerator**
Gas generator
Générateur de gaz

(30) Priorität: 23.01.1998 DE 29801104 U
(43) Veröffentlichungstag der Anmeldung: 28.07.1999
(73) Patentinhaber: TRW Occupant Restraint Systems GmbH & Co. KG, 73553 Alfdorf (DE)
(72) Erfinder: Fischer, Anton, 73579 Leinweiler (DE); Seitz, Martin, 73527 Schwäbisch Gmünd (DE)
(74) Vertreter: Kitzhofer, Thomas, Dipl.-Ing.

(56) Entgegenhaltungen:
- DE-A- 2 321 860
- DE-U- 29 702 011
- DE-U- 29 716 296
- PATENT ABSTRACTS OF JAPAN vol. 1995, no. 11, 26. Dezember 1995 (1995-12-26) & JP 07 217785 A (TOKYO GAS CO LTD), 15. August 1995 (1995-08-15)

## Beschreibung

Die Erfindung betrifft einen Gasgenerator, insbesondere Rohrgasgenerator, mit einem Gehäuse, wenigstens einer daran angeschlossenen, das erzeugte Gas zu einem Verbraucher führenden Rohrleitung und mit einem Kupplungsstück, welches das Gehäuse mit der Rohrleitung verbindet.

Gasgeneratoren werden inzwischen nicht nur unmittelbar in der Nähe ihres Verbrauchers, üblicherweise eines Gassacks angeordnet, sondern aus Platzgründen auch von diesem entfernt an Stellen im Fahrzeug untergebracht, an denen mehr Bauraum zur Verfügung steht. Eine Rohrleitung stellt die Verbindung zwischen Gasgenerator und Verbraucher her. Die Verbindung zwischen dem Gehäuse des Gasgenerators und der Rohrleitung in Form eines Kupplungsstücks muß eine gasdichte Abdichtung zwischen den miteinander verbundenen Teilen sicherstellen. Hierzu ist es bekannt, die Rohrleitung und den Gasgenerator in entsprechende Öffnungen im Kupplungsstück einzuschrauben, was bezüglich der Montage aufwendig ist. Ferner kann das die Rohrleitung bildende Rohr auch an dem Kupplungsstück angeschweißt sein. Jedoch ist bei letzterer Lösung keine Modulbauweise mehr möglich, bei der auch unterschiedlich lange Rohrleitungen mit dem gleichen Kupplungsstück verbaut werden können. Die Gasdichtigkeit zwischen dem Kupplungsstück und dem Gasgenerator sowie der Rohrleitung ist bei langen Rohrleitungen wichtig, da hier ein Druckabfall besonders nachteilig ist. Solche lange Rohrleitungen sind z.B. sogenannte Lanzen, die sich entlang der A-Säule über den Dachrahmen bis zur C-Säule eines Fahrzeugs erstrecken und einen sogenannten ABC-Gassack aufblasen, der vorhangähnlich die Seitenscheiben des Fahrzeugs abdecken kann.

Eine Einrichtung nach dem Oberbegriff des Anspruchs 1 geht aus der DE 297 02 011 U hervor.

Die Erfindung schafft einen Gasgenerator mit einer über das Kupplungsstück gasdicht angeschlossenen Rohrleitung, wobei sich die Verbindung der Teile durch eine extreme Druckdichtigkeit auszeichnet. Dies wird bei einem Gasgenerator der eingangs genannten Art dadurch erreicht, daß zwischen Kupplungsstück und Gehäuse sowie zwischen Kupplungsstück und Rohrleitung wenigstens eine elastische Dichtung angeordnet ist, welche Vorsprünge aufweist, die in Ausnehmungen in dem Kupplungsstück, dem Gehäuse und/oder der Rohrleitung eindringen. Damit wird einerseits sichergestellt, daß die elastische Dichtung beim Zusammenbau stets an der richtigen Stelle ist und nicht verschoben werden kann und sich andererseits aufgrund des hohen Druckes bei aktiviertem Gasgenerator nicht verlagert.

Vorzugsweise ist die Dichtung der Innenkontur des Kupplungsstücks angepaßt und stellt damit ein hohles, die Innenkontur auskleidendes Formteil dar. Gemäß der bevorzugten Ausführungsform ragen die Vorsprünge in Gasauslaßöffnungen im Gehäuse.

Die Erfindung schafft gemäß einer weiteren Ausführungsform auch ein einfach und schnell zu montierendes Kupplungsstück. Dieses besteht aus zwei durch Verbindungselemente gasdicht aneinandergepreßten Schalen, die zwischen sich Abschnitte des Gehäuses und der Rohrleitung klemmen. Diese Schalen können z.B. durch Schraubverbindungen oder durch an wenigstens einer Schale angeformte, umgebogene Laschen aneinandergepreßt werden.

Damit möglichst wenig Einzelteile verbraucht werden müssen, ist ferner vorgesehen, daß die Schalen an einem gemeinsamen Randbereich einstückig miteinander verbunden sind und der Randbereich als Scharnier wirkt, das ein Auseinander- und Zusammenklappen der Schalen zum Montieren von Gasgenerator und Rohrleitung erlaubt. Durch das Vorsehen von Schalen ergibt sich auch der Vorteil, daß diese von außen auf das Gehäuse und die Rohrleitungen aufgesetzt werden können und sich die elastische Dichtung nicht verschiebt.

Weitere Merkmale und Vorteile der Erfindung ergeben sich aus der nachfolgenden Beschreibung und aus den nachfolgenden Zeichnungen, auf die Bezug genommen wird.

In den Zeichnungen zeigen:
Figur 1 eine perspektivische Ansicht einer ersten Ausführungsform, bei der die Einzelteile sowie der montierte Gegenstand zu erkennen sind, und
Figur 2 eine Querschnittsansicht durch das Kupplungsstück gemäß einer zweiten Ausführungsform der Erfindung mit aneinandergesetzten Schalen, die jedoch noch nicht miteinander verbunden sind.

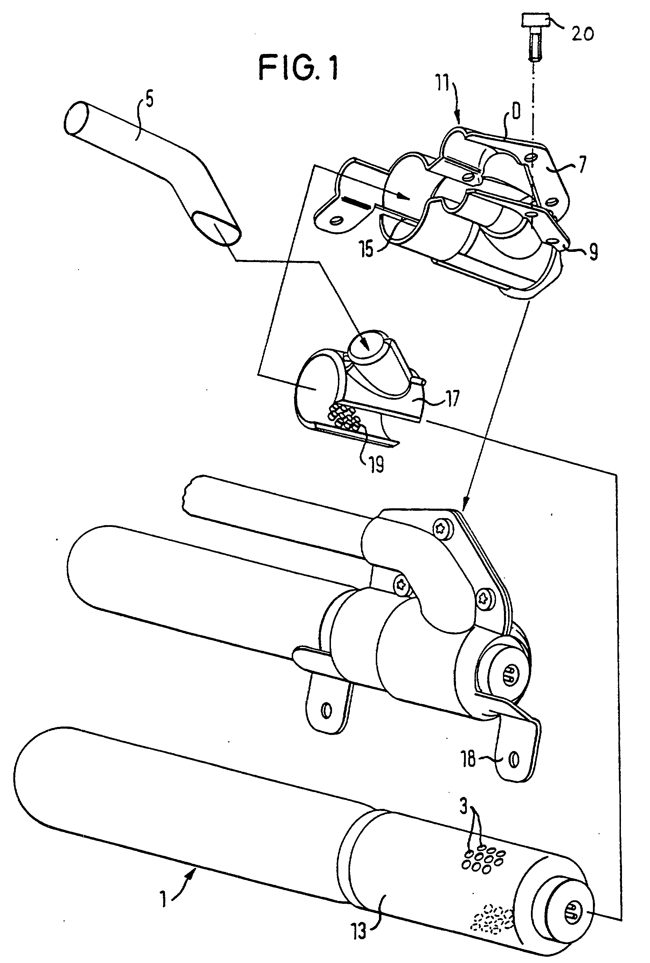

In Figur 1 ist ein Rohrgasgenerator 1 dargestellt, der an einem stirnseitigen Ende zahlreiche Gasauslaßöffnungen 3 hat. Dieser Rohrgasgenerator dient dem Aufblasen eines sogenannten ABC-Gassacks, der bereits zuvor beschrieben wurde und sich von der A- über die B- bis zur C-Säule eines Fahrzeugs erstreckt. In diesen ABC-Gassack ragt eine in Figur 1 ebenfalls zu erkennende Rohrleitung 5. Diese ist der Form der A-Säule und des Dachrahmens sowie der C-Säule im wesentlichen angepaßt. Die Rohrleitung 5 wird durch ein aus zwei Schalen 7, 9 bestehendes Kupplungsstück 11 gasdicht an das Gehäuse 13 des Gasgenerators im Bereich der Gasauslaßöffnungen 3 angeschlossen. Die beiden Schalen 7, 9 sind an einem gemeinsamen Randbereich 15 einstückig miteinander verbunden. Der Randbereich 15 dient als Scharnier, der ein Auseinander- und Zusammenklappen der Schalen zum einfachen Einsetzen des Gehäuses 13 und der Rohrleitung 5 erlaubt. An die Schalen sind auch Flansche 18 angeformt, die als Befestigungsflansche für die entstehende Einheit aus Gasgenerator 1, Kupplungsstück 11 und Rohrleitung 15 im Fahrzeug dienen. Eine elastische Dichtung 17 in Form einer Art Manschette ist als hohler Formkörper ausgebildet, der der Innenkontur des Kupplungsstücks 11 angepaßt ist. Die Dichtung 17 hat die Form zweier spitz ineinanderlaufender Rohre, wobei der Teil, der auf das Gehäuse 13 gesetzt wird, innenseitig einige einstückig angeformte Vorsprünge 19 hat, die in einige Gasauslaßöffnungen 13 ragen und zur Lagesicherung der Dichtung 17 dienen.

Der Zusammenbau geht folgendermaßen vonstatten. Zuerst wird die Dichtung 17, deren größerer zylindrischer Bereich geschlitzt ist, auf das Gehäuse 13 aufgesetzt. Die Vorsprünge 19 greifen in die Gasauslaßöffnungen 3 ein, so daß sich eine Art Clip-Verbindung ergibt. Dadurch wird auch ein Verdrehschutz für die Bauteile zueinander sowie relativ zur Dichtung 17 erreicht. Anschließend wird die Rohrleitung 5 in die Öffnung des kleineren zylindrischen Abschnitts der Dichtung 17, wie mit einem Pfeil angedeutet, gesteckt. Die nun vorfixierte Einheit wird zwischen die gespreizten Schalen 7, 9 geführt. Anschließend werden über Verbindungselemente in Form von Schrauben 20 die beiden Schalen 7, 9 zusammengepreßt. Die Dichtung 17 füllt alle Zwischenräume zwischen Gehäuse 3, Rohrleitung 5 und Kupplungsstück 11 aus und wird zudem durch die aneinandergepreßten Schalen 7, 9 verformt. Es ergibt sich damit eine gasdichte Verbindung zwischen dem Gehäuse 13 und der Rohrleitung 5, die sehr einfach und schnell zu montieren ist.

Der Gasgenerators 1 hat an seinem Umfang verteilt, wie bereits erläutert, mehrere Gasauslaßöffnungen 3. Die Dichtung 17 hat ferner den Zweck, daß sie alle Ausströmöffnungen 3 durch entsprechende Vorsprünge 19 schließt, die nicht im Bereich des Einlasses der fertig montierten Rohrleitung 5 liegen. Damit wird Gas nur über die nicht verschlossenen Gasauslaßöffnungen 3 in die Rohrleitung 5 gelangen.

In der Mitte von Figur 1 ist die fertig montierte Einheit zu erkennen. Diese Einheit zeichnet sich noch durch folgende weitere Vorteile aus:

Die hohe Verdrehfestigkeit der Teile zueinander,
keine aufwendige Bearbeitung unter Einhaltung von engen Toleranzen des in das Kopplungsstück 11 hineinragenden Endes der Rohrleitung 5, und
wenig Einzelteile.

Die Verbindung zwischen Gasgenerator 1 und Rohrleitung 5 bleibt druckdicht bis in einem Bereich zwischen 150 bis 300 bar.

Das Kopplungsstück 11 ist sehr einfach herstellbar, da es ein einteiliges Stanzbiegeteil darstellt.

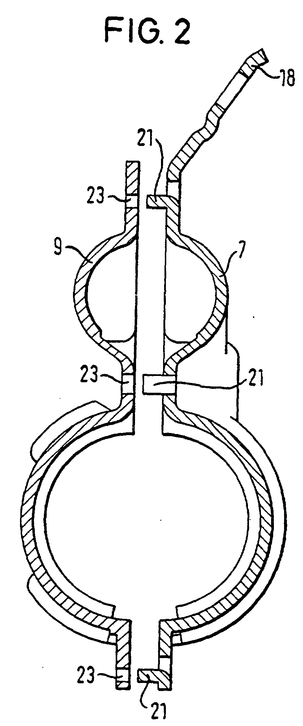

In Figur 2 sind die im Zusammenhang mit Figur 1 bereits erläuterten Teile mit entsprechenden Bezugszahlen versehen. Die Schalen 7, 9 sind im Gegensatz zu der zuvor erläuterten Ausführungsform aber nicht einstückig miteinander verbunden, sondern Einzelteile. Sie werden durch an der Schale 7 ausgestanzte und umgebogene Lappen 21 aneinander befestigt, nachdem die Laschen durch entsprechende Schlitze 23 in der Schale 9 geführt sind. In Figur 2 sind das Gehäuse 13 und die Rohrleitung 5 sowie die Dichtung 17 nicht zu sehen. Bei dieser Ausführungsform sind separate Verbindungselemente wie Schrauben nicht notwendig. Da die Laschen 21 nur an einer Schale angeformt sind, müssen sie nur von einer Seite, nämlich von der Außenseite der Schale 9 nach dem Fügen der Schalen 7, 9 umgebogen werden.

## Patentansprüche

1. Gasgenerator, insbesondere Rohrgasgenerator mit einem Gehäuse (13), mit wenigstens einer daran angeschlossenen, das erzeugte Gas zu einem Verbraucher führenden Rohrleitung (5) und mit einem Kupplungsstück (11), das das Gehäuse (13) mit der Rohrleitung (5) verbindet, **dadurch gekennzeichnet, daß** zwischen Kupplungsstück (11) und Gehäuse (13) sowie Kupplungsstück (11) und Rohrleitung (5) wenigstens eine elastische Dichtung (17) angeordnet ist, welche Vorsprünge (19) aufweist, die in Ausnehmungen in dem Kupplungsstück (11), dem Gehäuse (13) und/oder der Rohrleitung (5) eindringen.

2. Gasgenerator nach Anspruch 1, **dadurch gekennzeichnet, daß** das Gehäuse (13) Gasauslaßöffnungen (3) hat und die Vorsprünge (19) in einige Gasauslaßöffnungen (3) ragen.

3. Gasgenerator nach Anspruch 2, **dadurch gekennzeichnet, daß** die Vorsprünge (19) einige der Gasauslaßöffnungen (3) abdichten.

4. Gasgenerator nach Anspruch 2 oder 3, **dadurch gekennzeichnet, daß** die Dichtung (17) der Innenkontur des Kupplungsstücks (11) angepaßt ist und ein hohles Formteil bildet.

5. Gasgenerator nach einem der vorstehenden Ansprüche, **dadurch gekennzeichnet, daß** das Kupplungsstück (11) aus zwei durch Verbindungselemente im montierten Zustand gasdicht aneinandergepreßten Schalen (7, 9) besteht, die zwischen sich einen Abschnitt des Gehäuses (13) und der Rohrleitung (5) klemmen.

6. Gasgenerator nach Anspruch 5, **dadurch gekennzeichnet, daß** die Verbindungselemente an wenigstens einer Schale (7) angeformte, umgebogene Laschen (21) sind, die die andere Schale (9) hintergreifen.

7. Gasgenerator nach einem der vorstehenden Ansprüche, **dadurch gekennzeichnet, daß** die Schalen (7, 9) einen gemeinsamen Randbereich (15) haben, an den sie einstückig miteinander verbunden sind, und daß der Randbereich (15) als Scharnier wirkt, das ein Auseinander- und Zusammenklappen der Schalen (7, 9) erlaubt.

## Claims

1. A gas generator, in particular a tubular gas generator, comprising a housing (13), at least one pipeline (5) connected to the housing and directing the generated gas to a consumer, and a coupling piece (11) which connects the housing (13) with the pipeline (5), **characterized in that** between the coupling piece (11) and the housing (13) and also between the coupling piece (11) and the pipeline (5) at least one elastic seal (17) is arranged, which seal has projections (19) penetrating into recesses in the coupling piece (11), in the housing (13) and/or in the pipeline (5).

2. The gas generator according to claim 1, **characterized in that** the housing (13) has gas outlet openings (3) and the projections (19) project into some gas outlet openings (3).

3. The gas generator according to claim 2, **characterized in that** the projections (19) seal some of the gas outlet openings (3).

4. The gas generator according to claim 2 or 3, **characterized in that** the seal (17) is adapted to the inner contour of the coupling piece (11) and forms a hollow shaped part.

5. The gas generator according to any of the preceding claims, **characterized in that** the coupling piece (11) consists of two shells (7, 9) pressed against each other in a gas-tight manner by connecting elements in the mounted state, which shells (7, 9) clamp between them a section of the housing (13) and of the pipeline (5).

6. The gas generator according to claim 5, **characterized in that** the connecting elements are bent tongues (21) which are formed on at least one shell (7) and engage behind the other shell (9).

7. The gas generator according to any of the preceding claims, **characterized in that** the shells (7, 9) have a common edge region (15) at which they are integrally connected with each other, and that the edge region (15) acts as a hinge which permits to unfold and fold up the shells (7, 9).

## Revendications

1. Générateur de gaz, en particulier générateur de gaz tubulaire, comportant un boîtier (13), au moins une conduite tubulaire (5) raccordée à ce dernier et amenant le gaz engendré à un consommateur, et une pièce d'accouplement (11) qui relie le boîtier (13) à la conduite tubulaire (5), **caractérisé en ce qu'**entre la pièce d'accouplement (11) et le boîtier (13) ainsi qu'entre la pièce d'accouplement (11) et la conduite tubulaire (5) est agencé au moins un joint élastique (17) qui présente des saillies (19) qui pénètrent dans des évidements ménagés dans la pièce d'accouplement (11), dans le boîtier (13) et/ou dans la conduite tubulaire (5).

2. Générateur de gaz selon la revendication 1, **caractérisé en ce que** le boîtier (13) a des orifices de sortie de gaz (3) et les saillies (19) font saillie dans certains orifices de sortie de gaz (3).

3. Générateur de gaz selon la revendication 2, **caractérisé en ce que** les saillies (19) étanchent certains des orifices (3).

4. Générateur de gaz selon la revendication 2 ou 3, **caractérisé en ce que** le joint (17) est adapté au contour intérieur de la pièce d'accouplement (11) et forme une pièce moulée creuse.

5. Générateur de gaz selon l'une des revendications précédentes, **caractérisé en ce que** la pièce d'accouplement (11) est constituée par deux coques (7, 9) pressées l'une contre l'autre par des éléments de liaison, de manière étanche au gaz à l'état de montage, lesquelles serrent entre elles un tronçon du boîtier (13) et de la conduite tubulaire (5).

6. Générateur de gaz selon la revendication 5, **caractérisé en ce que** les éléments de liaison sont des pattes (21) repliées formées sur au moins une coque (7) qui engagent l'autre coque (9) par l'arrière.

7. Générateur de gaz selon l'une des revendications précédentes, **caractérisé en ce que** les coques (7, 9) ont une région de bord commune (15) au niveau de laquelle elles sont reliées l'une à l'autre d'un seul tenant, et **en ce que** la région de bord (15) agit à la manière d'une charnière qui permet de déployer et de replier les coques (7, 9).
